# EUROPÄISCHE PATENTSCHRIFT

(11) **EP 0 849 352 B1**
(45) Veröffentlichungstag und Bekanntmachung des Hinweises auf die Patenterteilung: **26.03.2003**
(21) Anmeldenummer: 97121435.8
(22) Anmeldetag: 05.12.1997
(51) Int. Cl.: C10L 1/28

(54) **Verwendung von Silicon-Polyether-Copolymeren zum Entschäumen von Dieselkraftstoff**
Use of silicone polyether copolymers for defoaming diesel fuel
Utilisation de copolymères silicone-polyether pour le traitement des anti mousses de gazole

(30) Priorität: 17.12.1996 DE 19652434
(43) Veröffentlichungstag der Anmeldung: 24.06.1998
(73) Patentinhaber: Goldschmidt AG, 45127 Essen (DE)
(72) Erfinder: Boinowitz, Tammo, Dr., 45131 Essen (DE); Kugel, Kerstin, 40882 Ratingen (DE); Langenhagen, Rolf-Dieter, 45529 Hattingen (DE); Schlachter, Ingo, Dr., 45277 Essen (DE); Weier, Andreas, Dr., 45289 Essen (DE)

(56) Entgegenhaltungen:
- EP-A- 0 499 200
- EP-A- 0 681 023
- US-A- 5 542 960

## Beschreibung

Die als Dieselkraftstoff verwendeten Kohlenwasserstoffgemische, die auch Aromaten, Gasöl und Kerosin beinhalten können, haben die unangenehme Eigenschaft, beim Abfüllen in Vorratsbehälter, wie Lagertanks und Kraftstoffbehälter von Motorfahrzeugen, in Verbindung mit Luft, Schaum zu entwickeln. Dies führt zur Verzögerung des Abfüllvorgangs und zu unzureichender Befüllung der Behälter. Es ist deshalb üblich, dem Dieselkraftstoff Entschäumer zuzusetzen. Diese Entschäumer sollen in möglichst geringer Konzentration wirksam sein und dürfen bei der Verbrennung des Dieselkraftstoffs im Motor keine schädlichen Rückstände bilden oder die Verbrennung des Kraftstoffs negativ beeinflussen. Entsprechend wirksame Entschäumer sind in der Patentliteratur beschrieben.

Solche Siliconpolyether-Copolymeren wirken, weil sie nur teilweise im Dieselkraftstoff löslich sind und die Oberflächenspannung des Dieselkraftstoffs herabgesetzt wird. Die Dimethylsiloxaneinheiten setzen die Oberflächenenergie des Dieselkraftstoffes herab, während die Polyetherseitenkette die Löslichkeit des Copolymers im Kraftstoff reduziert. Die bekannten Copolymere, die auch als Polyethersiloxane oder als organofunktionell modifizierte Polysiloxane bezeichnet und mit der allgemeinen Formel

Me₃Si(OSiMe₂)ₓ(OSiMeR)_{y}OSiMe₃

beschrieben werden, enthalten als Rest R einen Polyether, der aus Anlagerung solcher Monomeren, wie Propylenoxid, jedoch häufiger Ethylenoxid, an Startalkohole, wie Allylalkohol, entsteht.

So betrifft die GB-B-2 173 510 ein Verfahren zum Entschäumen von Dieselkraftstoff oder Jet Fuel, wobei dem Kraftstoff ein auf einem Siliconpolyether-Copolymer beruhendes Antischaummittel zugegeben wird, dessen Polyether mit der allgemeinen Formel Q(A)ₙOZ beschrieben wird. Q repräsentiert eine difunktionelle Gruppe, welche an einem Si-Atom gebunden ist, A eine Oxyalkylengruppe, bei der mindestens 80 % Oxyethyleneinheiten sind und Z ein Wasserstoffatom oder eine andere monofunktionelle Gruppe.

Ein Nachteil dieses Antischaummittels besteht in der schlechten Entschäumung von feuchtem Dieselkraftstoff. Unter feuchtem Dieselkraftstoff versteht man einen Kraftstoff, der ca. 200 ppm Wasser beinhaltet. Dieses Wasser ist entweder Kondenswasser, welches in den Lagertanks in den Kraftstoff gelangt, oder es wird während des Transportes in Öltankern, durch die nicht vollständige Entleerung der Tanks von Wasser, in den Kraftstoff eingetragen.

Die Antischaummittel werden in den Kraftstoff in Verbindung mit Additivpaketen eingearbeitet. Diese Additivpakete werden dem rohen Dieselöl zu seiner Eigenschaftsverbesserung zugesetzt. Unter Additivpaketen versteht man Mischungen verschiedener Zusatzstoffe, wie z. B. Mittel zur Verbesserung des Verbrennungsverhaltens, Mittel zur Verminderung der Rauchbildung, Mittel zur Verringerung der Bildung schädlicher Abgase, Inhibitoren zur Verringerung der Korrosion im Motor und seinen Teilen, grenzflächenaktive Substanzen, Schmiermittel und dergleichen. Derartige Additivpakete sind z. B. in der GB-A-2 248 068 und in der Zeitschrift Mineralöltechnik 37(4), 20 ff. beschrieben. Die Zusätze des Additivpaketes sind dabei in einem organischen Lösungsmittel zu einem Stammkonzentrat gelöst, das dem rohen Dieselkraftstoff zugesetzt wird.

Es ist aus der US-A-5 542 960 bekannt, daß Phenolderivate (besonders bevorzugt Eugenol) ein relativ gutes Entschäumungsvermögen in feuchtem Dieselkraftstoff zeigen.

Aus der EP-B-0 499 200 ist bekannt, daß Siliconpolyether-Copolymere bestimmte Polyether enthalten, die aus Anlagerung verschiedener Monomeren hergestellt sind, die auch Aromaten enthalten. Diese Substanzen werden als zellöffnende Verbindungen bei der Polyurethanschaumstoff-Produktion, also in relativ polaren Systemen, beschrieben.

Überraschenderweise wurde gefunden, daß die Entschäumung von feuchtem Diesel, also in extrem unpolaren Systemen, gegenüber den üblicherweise verwendeten Entschäumern bedeutend verbessert werden kann, wenn mehr als 65 % der Siliconpolyether-Copolymere einen aromatenhaltigen Polyether enthalten.

Gegenstand vorliegender Erfindung ist deshalb ein Dieselkraftstoff, enthaltend 0,5 bis 50 ppm, bezogen auf Kraftstoff, eines Entschäumers, der mindestens zu 65 Gew.-% Siliconpolyether-Copolymere der allgemeinen Formel I 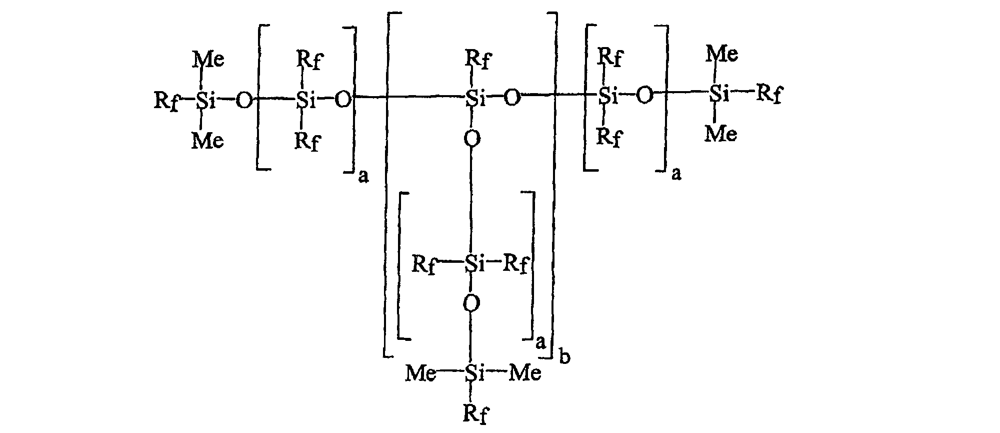 enthält, wobei der Rest R_{f}
der Rest R¹ oder der Rest R² oder der Rest R³ ist, mit der Maßgabe, daß mindestens ein Rest R_{f} der Rest R² ist, wobei
- R¹: ein Alkylrest mit 1 bis 4 Kohlenstoffatomen oder der Arylrest ist, jedoch mindestens 80 % der Reste Rf Methylreste sind,
- R2: ein Polyetherrest der Formel II

-(Y)_{c}[O(C₂H_{4-d}R'_{d}O)ₘ(CₓH₂ₓO)ₚZ]_{w}

ist, mit der Bedeutung
c = 0 oder 1,
d = 1 bis 3,
m ≥ 1,
x = 2 bis 4,
p ≥ 1,
w = 1 bis 4,
Summe m + p = 3 bis 100,
R' = ein Wasserstoffrest, ein einwertiger aliphatischer, aromatischer oder substituierter aromatischer Kohlenwasserstoffrest mit 1 bis 18 C-Atomen, dessen Substituenten aus den Gruppen Wasserstoffrest, Alkylrest mit 1 bis 6 C-Atomen, Alkoxyrest und Hydroxyrest ausgewählt sind, wobei die Reste R' unterschiedlich sein können, jedoch pro Copolymermolekül mindestens ein Rest R' einen Aromaten oder substituierten Aromaten bezeichnet,
Z = ein Wasserstoffrest oder ein einwertiger organischer Rest,
Y = ein (w+1)-bindiger linearer oder verzweigter Kohlenwasserstoffrest mit 1 bis 18 C-Atomen R3 ein Polyetherrest der Formel III

-(F)_{q}[O(CₓH₂ₓO)ᵣZ]_{g}

ist, mit der Bedeutung
g = 1 bis 4,
q = 0 oder 1,
x = 2 bis 4,
r ≥ 3,
F = ein (g+1)-bindiger linearer oder verzweigter Kohlenwasserstoffrest mit 1 bis 18 C-Atomen,
und wobei
b eine Zahl von 0 bis 8 ist,
a eine Zahl von 1 bis 100 ist, wenn b eine Zahl von 6 bis 8 ist;
a eine Zahl von 1 bis 200 ist, wenn b eine Zahl von 3 bis 6 ist;
a eine Zahl von 1 bis 300 ist, wenn b eine Zahl von 0 bis 3 ist.

Das Siloxangerüst kann geradkettig (b = 0) oder aber verzweigt sein (b > 0 bis 8). Der Wert von a kann erfahrungsgemäß nur in der angegebenen Weise mit Werten von b kombiniert werden, da ansonsten die erhöhte Viskosität der Polymermoleküle zur Vergelung führt und eine Handhabung unmöglich macht. Die erfindungsgemäßen Verbindungen sind daher bei Raumtemperatur flüssig. Der Wert von b wie auch der Wert von a sind, wie dem Fachmann geläufig ist, als durchschnittliche Werte im Polymermolekül zu verstehen, da die erfindungsgemäß zu verwendenen Siliconpolyether-Copolymeren in Form von - im Regelfall - äquilibrierten Gemischen vorliegen.

Die Reste R¹ sind Alkylreste mit 1 bis 4 Kohlenstoffatomen, wie Methyl-, Ethyl-, Propyl-, Butyl- oder Arylreste, wobei für die letztgenannten Phenylreste bevorzugt sind. Herstellungs- und preisbedingt sind Methylreste bevorzugt, so daß mindestens 80 % der Reste R¹ Methylreste sein sollen. Besonders bevorzugt sind solche Siliconpolyether-Copolymere, bei denen alle Reste R¹ Methylreste sind.

Ein weiterer Gegenstand der Erfindung ist die Verwendung der Siliconpolyether-Copolymere der Formel I zur Entschäumung von flüssigen Kraftstoffen, basierend auf Kohlenwasserstoffen, in Mengen von 0,5 bis 50 ppm, bezogen auf Kraftstoff.

Das Wesen der vorliegenden Erfindung besteht insbesondere darin, daß Siliconpolyether-Copolymere verwendet werden, welche eine besondere Kombination von Polyethern enthalten, indem der Rest R' in Formel I ein Phenylrest ist, der gegebenenfalls auch ein substituierter Aromat sein kann. Durch gezielte Auswahl solch eben genannter Polyether, die auch mit herkömmlichen, nicht hydrosilylierend umgesetzten Polyethern kombiniert werden können, die analog R² oder R³ aufgebaut und durch Anlagerung von Monomeren an einen Startalkohol hergestellt werden, gelingt es, die Entschäumung des Dieselkraftstoffs zu optimieren.

Die in der Formel I beschriebenen Polyether werden durch Umsetzung eines Startalkohols, der bevorzugt Allylalkohol ist, durch Anlagerung von Monomeren gewonnen. Geeignet sind Ethylenoxid, Propylenoxid, Tetrahydrofuran, Butylenoxid, iso-Butylenoxid in dem Rest (F)_{q}[O(CₓH₂ₓO)ᵣZ]_{g}, mit der Maßgabe, daß g = 1 bis 4, q = 0 oder 1, x = 2 bis 4 und r ≥ 3 sind, sowie für die aromatenhaltigen Polyether zusätzlich Styroloxid, α-Methylstyroloxid in dem Polyetherrest

-(Y)_{c}[O(C₂H_{4-d}R'_{d}O)ₘ(CₓH₂ₓO)ₚZ]_{w},

wobei c = 0 oder 1, d = 1 bis 3, m ≥ 1, x = 2 bis 4, p ≥ 1 und w = 1 bis 4 sind. Dabei kann die Zusammensetzung der Monomere beliebig gewählt sein, so daß beispielsweise Styroloxid-, Ethylenoxid- und Propylenoxid-Blöcke enthalten sein können. Außerdem ist auch eine Mischung der Monomere einsetzbar, so daß Polyether erhalten werden, in denen die Einheiten in statistischer Verteilung vorliegen. Bevorzugt beträgt der Gewichtsanteil des aromatenhaltigen Monomeren am Polyether des Siliconpolyether-Copolymeren mindestens 1 Gew.-%. In der besonders bevorzugten Ausführung beträgt dieser Anteil mindestens 4 Gew.-%. Die Reste Z können gleich oder verschieden sein und bedeuten unabhängig voneinander einen Wasserstoffrest oder einen einwertigen organischen Rest. Z kann dabei eine Alkylkette mit einem und bis 18 Kohlenstoffatomen, ein Benzylrest, ein alkylsubstituierter Benzylrest mit bis zu vier Kohlenstoffatomen im Alkylrest, eine COR⁴-Gruppe mit einem Rest R⁴, der eine Alkylkette mit einem und bis 18 Kohlenstoffatomen aufweist, eine CONHR⁵-Gruppe mit einem Rest R⁵, der ein Wasserstoffatom oder eine Alkylkette mit einem und bis 18 Kohlenstoffatomen aufweist, CO₂R⁶, der eine Alkylkette mit einem und bis 18 Kohlenstoffatomen aufweist oder eine Alkylkette sein, die teilweise oder vollständig cyano- oder fluorsubstituiert ist. Vorzugsweise ist Z ein Wasserstoffrest oder ein Methylrest. Im Rest R³ hat der Index r vorzugsweise einen Zahlenwert von 8 bis 100. Im Rest R² hat der Index m vorzugsweise einen Zahlenwert von 1 bis 10, besonders bevorzugt von 2 bis 5, der Index p vorzugsweise einen Zahlenwert von 2 bis 20, besonders bevorzugt von 4 bis 10. Bei diesen Indices handelt es sich um durchschnittliche Zahlen, da es bekannt ist, daß bei der Anlagerung von Epoxiden an Alkohole ein Gemisch von Verbindungen unterschiedlicher Kettenlänge erhalten wird.

Die Reste Rf können durch zwei verschiedene Arten der chemischen Umsetzung an ein Polysiloxan gebunden werden. Der Hydrolyse von Chlorsiloxanen mit Polyethern unter Abspaltung von Chlorwasserstoff steht gleichrangig die sogenannte Hydrosilylierung gegenüber, bei der der Rest R_{f} an das Molekül des Polysiloxans durch Addition an SiH-Gruppen des Polysiloxans in Anwesenheit eines Hydrosilylierungskatalysators eingeführt wird. Nach dem Stand der Technik werden für die letztgenannte Möglichkeit Platin-Katalysatoren, wie zum Beispiel cis-Dichlordiaminplatin(II) oder Hexachloroplatin(IV)säure, verwendet.

Die erfindungsgemäß zu verwendenden Siliconpolyether-Copolymere können dem Dieselkraftstoff direkt zugesetzt werden, wobei ein Zusatz von 0,5 bis 50 ppm, bezogen auf Dieselkraftstoff, für eine wirksame Entschäumung ausreicht. Bevorzugt beträgt der Zusatz 2 bis 20 ppm.

Es ist jedoch auch möglich und stellt das in der Praxis bevorzugte Verfahren dar, das erfindungsgemäß zu verwendende Siliconpolyether-Copolymer dem sogenannten Additivpaket, welches eingangs beschrieben worden ist, zuzusetzen.

Um die Wirkung des erfindungsgemäß zu verwendenden Siliconpolyether-Copolymers weiter zu verbessern, kann es von Vorteil sein, das erfindungsgemäß zu verwendende Siliconpolyether-Copolymer der Formel I, wobei dieses mehr als 65 % ausmacht, in einer Mischung mit einem herkömmlichen, nicht hydrosilylierend umgesetzten Polyether, der analog R² oder R³ aufgebaut und durch Anlagerung von Monomeren an einen Startalkohol hergestellt worden ist, oder einem herkömmlichen Siliconpolyether-Copolymer einzusetzen, das keine Reste R² enthält. Der Polyether oder das Siliconpolyether-Copolymer soll mit dem Siliconpolyether-Copolymer nach Formel I und dem Additivpaket verträglich sein. Er soll in dem zu entschäumenden Dieselkraftstoff gut dispergierbar sein. Die optimale Zusammensetzung des Mischungsverhältnisses kann jeweils in einfacher Weise durch Vorversuche ermittelt werden. Bevorzugt ist ein Mischungsverhältnis, bei dem das erfindungsgemäß zu verwendende Siliconpolyether-Copolymer mehr als 80 % der Mischung ausmacht.

### Beispiele

### Herstellung der Entschäumer A und B

Die Si-O-C-verknüpften Entschäumer werden nach dem Stand der Technik hergestellt, wie es zum Beispiel bei W.J. Noll, Chemistry and Technology of Silicones, Academic Press, New York (1968) beschrieben ist.

### Herstellung des Entschäumers C

86,3 g eines aromatenhaltigen Polyethers, wie in Tabelle 2 angegeben, werden mit 680 g eines herkömmlichen, allylgestarteten Polyethers, der ein Molekulargewicht von 1200 g/Mol und einen Oxyethylenanteil von 77 % aufweist, mit 13,8 mg (entspricht 10 ppm, bezogen auf Pt-Anteil) H₂PtCl₆•6H₂O in einem 2000-ml-Vierhalskolben, ausgestattet mit Rührer, Tropftrichter, Thermometer und Rückflußkühler, vorgelegt und unter Rühren auf 110 °C aufgeheizt. Bei dieser Temperatur werden 274 g (0,1 Mol) eines seitenständig SiH-funktionalisierten Polydimethylsiloxans der allgemeinen Formel 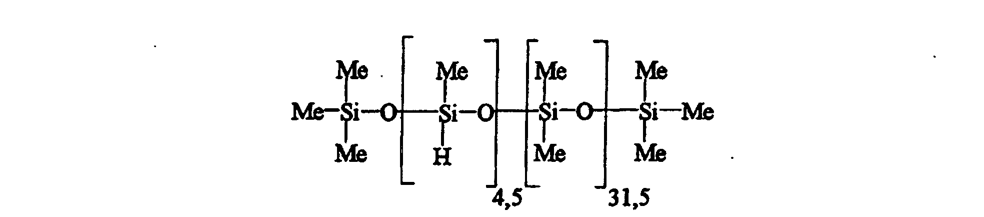 derart zugetropft, daß trotz einsetzender exothermer Reaktion eine Temperatur von 130 °C nicht überschritten wird. Nach beendeter Zugabe wird die Reaktionsmischung noch 1 bis 2 h weiter gerührt, bis die Umsatzkontrolle über den SiH-Wert zeigt, daß die Polyether hydrosilylierend angelagert worden sind. Bei einem Umsatz von > 99 % wird die Reaktion abgebrochen, und die Katalysatorreste werden aus der Reaktionsmischung durch Filtration abgetrennt. Durch nachfolgende Destillation im Ölpumpenvakuum werden flüchtige Nebenprodukte entfernt. Man erhält ein Produkt von gelblich klarem Aussehen (Beispiel C, Tabelle 1).

Das Siliconpolyether-Copolymer des Beispiels D (Tabelle 1) ist nach der im vorhergehenden Beispiel beschriebenen Weise hergestellt worden. Die genaue Zusammensetzung der Siliconpolyether-Copolymere wird in folgender Tabelle angegeben:

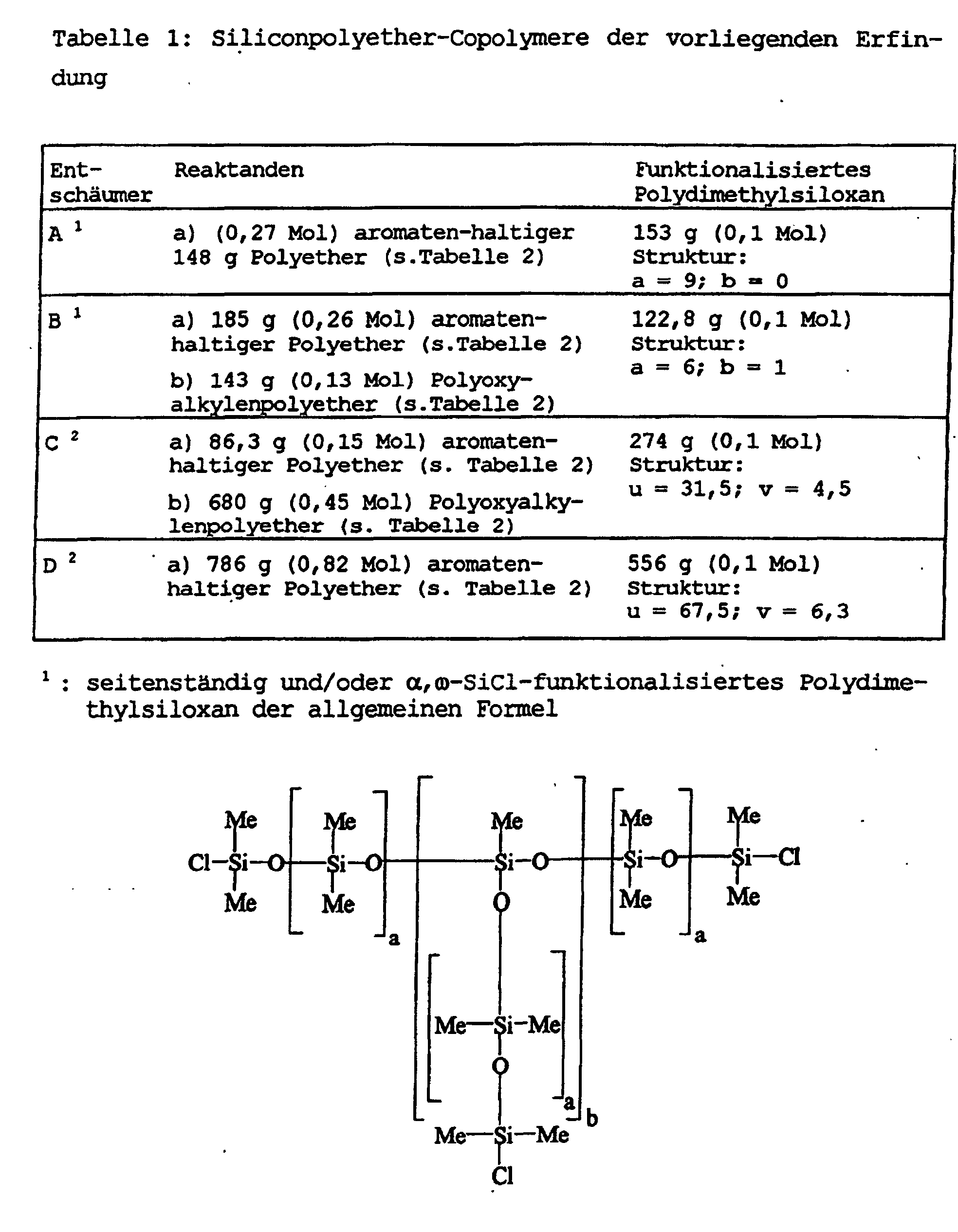

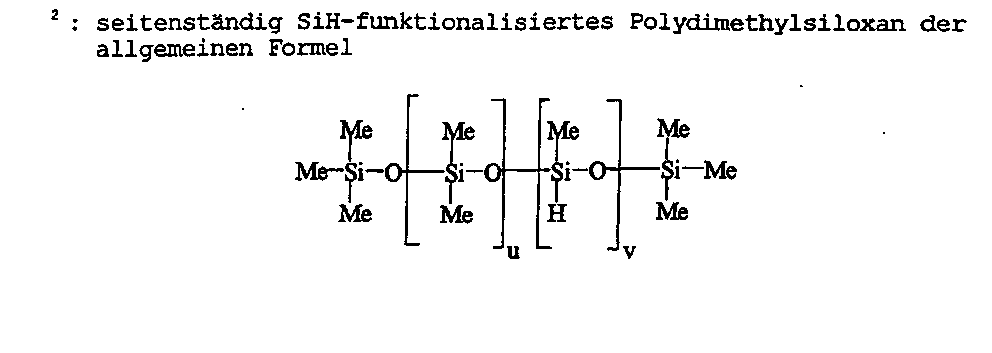

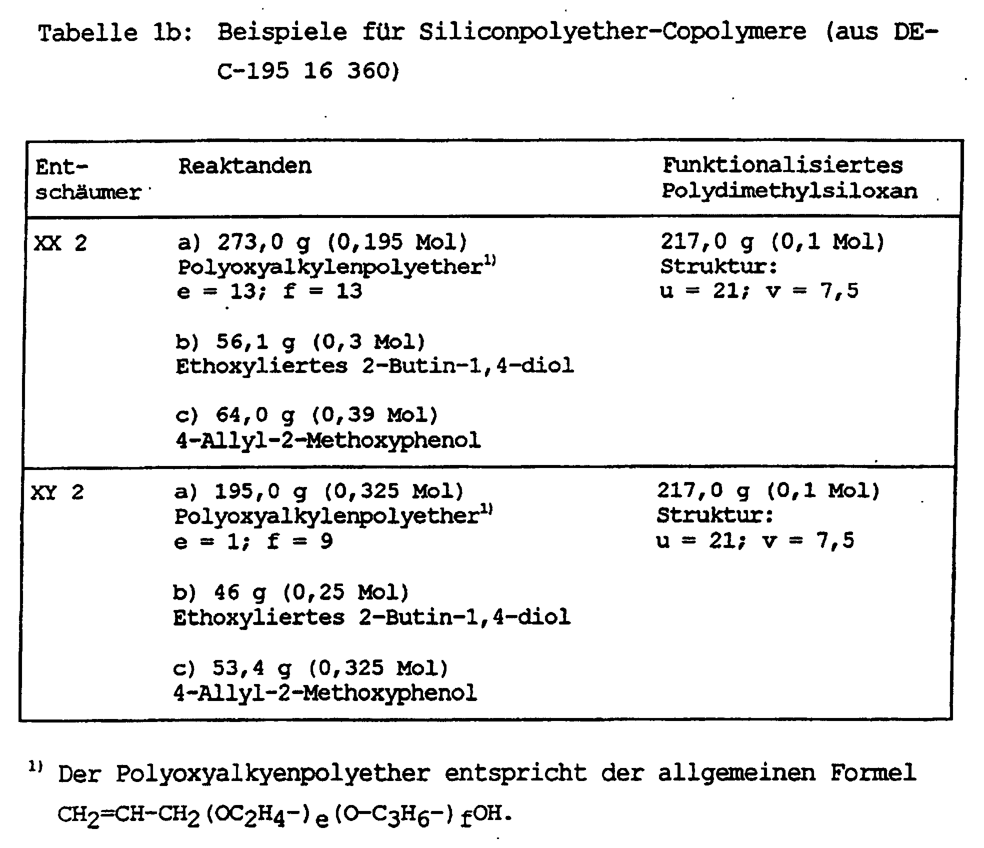

**Tabelle 2:**

| Polyether-Zusammensetzungen in den Siliconpolyether-Copolymeren der vorliegenden Erfindung | | | | | | | | |
|---|---|---|---|---|---|---|---|---|
| Bezeichnung | m | p | d | x | R² [%] | r | R³ [%] | Z |
| A | 2 | 7 | 1 | 2 | 100 | 0 | 0 | H |
| B | 3 | 8 | 1 | 2 | 67 | 26 | 33 | H |
| C | 2 | 4 | 1 | 2 | 25 | 26 | 75 | Me |
| D | 3 | 10 | 1 | 2 | 100 | 0 | 0 | Me |

Die erfindungsgemäßen Siliconpolyether-Copolymere werden mit dem handelsüblich erhältlichen Siliconpolyether-Copolymer Tegopren® 5851 (TP 5851) im Verhältnis 80 : 20 abgemischt und auch auf die entschäumende Wirkung im Dieselkraftstoff überprüft.

**Tabelle 3:**

| Mischungen von Siliconpolyether-Copolymeren | | |
|---|---|---|
| Bezeichnung | Produkt aus Tabelle 1 | Siliconpolyether-Copolymer |
| C1 | C | TP 5851 |
| D1 | D | TP 5851 |

Die anwendungstechnischen Vergleichsversuche werden mit Produkten des Standes der Technik durchgeführt. Als Vergleichssubstanzen dienen der Entschäumer X (entsprechend GB-B-2 173 510) und der Entschäumer XX (DE-C-195 16 360) sowie der dort als Beispiel E2 angegebene Entschäumer, hier als XY bezeichnet. Die genaue Struktur dieser Entschäumer ist der Tabelle 1b zu entnehmen.

Zur Prüfung des Entschäumungsvermögens der erfindungsgemäß zu verwendenden Siloxane oder der diese enthaltenden Zubereitungen werden die Siloxane oder die Zubereitungen in einem Additivpaket des Standes der Technik gelöst und eine bestimmte Menge dieser Mischung in 1500 g additivfreien Dieselkraftstoff (Schwefelgehalt: max. 0,05 %) eingerührt. Das Mischungsverhältnis des Siloxans oder seiner Zubereitung zum Additivpaket und die zum Kraftstoff gegebene Menge werden so gewählt, daß die gewünschte Siloxankonzentration und gleichzeitig eine Konzentration des Additivpaketes von 150 ppm im Dieselkraftstoff erzielt werden. Die Konzentration der erfindungsgemäßen Verbindungen im Dieselkraftstoff wird zwischen 8 und 15 ppm variiert.

Der Schaumzerfall des mit Additiv und Entschäumer versetzten Dieselkraftstoffes wird in einer Druckapparatur getestet. Die entsprechende Methode, die von der Firma ELF entwickelt worden ist, hat sich zu einem Standard der Messung von Schaumhöhe und Schaumzerfallszeiten entwickelt und kann über die Firma Verre + Science, Frankreich, bezogen werden.

**Tabelle 4:**

| Ergebnisse der Entschäumungstests | | | | | |
|---|---|---|---|---|---|
| Entschäumer | Einsatzkonzentration (ppm) | Schaumhöhe (ml) | Schaumzerfallszeit (s) | Schaumhöhe (ml) | Schaumzerfalls zeit (s) |
| | | trocken | trocken | feucht | feucht |
| Blindwert | | 110 | 16 | 104 | 20 |
| A | 15 | 55 | 6 | 54 | 4 |
| B | 15 | 30 | 1 | 40 | 3 |
| C | 15 | 50 | 5 | 58 | 6 |
| D | 8 | 27 | 1 | 26 | 1 |
| C1 | 15 | 32 | 2 | 33 | 2 |
| D1 | 10 | 30 | 1 | 30 | 1 |
| X | 15 | 45 | 8 | 80 | 15 |
| XX | 15 | 71 | 8 | 57 | 5 |
| XY | 15 | 34 | 36 | 40 | 6 |

Die Zusammenstellung der Ergebnisse zeigt, daß die erfindungsgemäß zu verwendenden aromatenhaltigen Siliconpolyether-Copolymere sehr gut zur Entschäumung von Dieselkraftstoff, besonders von feuchtem Dieselkraftstoff, geeignet sind.

Ein weiterer Effekt der erfindungsgemäßen Siliconpolyether-Copolymere ist, daß durch eine geänderte Auswahl der Lösemittel der Stockpunkt um 10 °C erniedrigt werden kann.

**Tabelle 5:**

| Stockpunkte der Additivpakete | |
|---|---|
| Additivpaket mit Entschäumer | Stockpunkt |
| C | -41 °C |
| X | -30 °C |

## Patentansprüche

1. Dieselkraftstoff, enthaltend 0,5 bis 50 ppm, bezogen auf Kraftstoff, eines Entschäumers, der mindestens 65 Gew.-% Siliconpolyether-Copolymere der allgemeinen Formel I 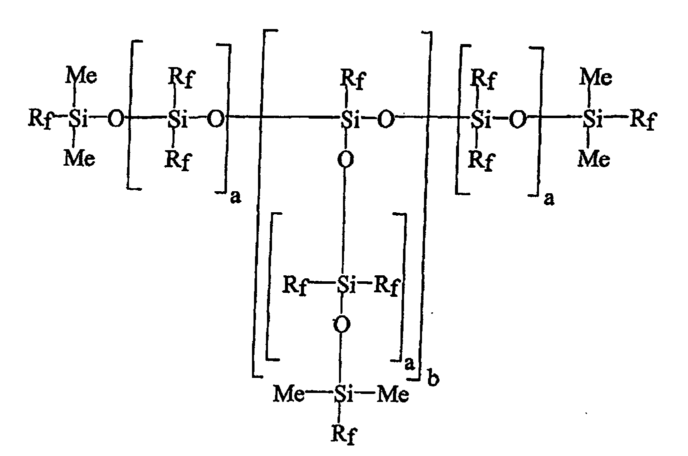 enthält, wobei der Rest R_{f}
der Rest R¹ oder der Rest R² oder der Rest R³ ist, mit
der Maßgabe, daß mindestens ein Rest R_{f} der Rest R² ist,
wobei
R¹ ein Alkylrest mit 1 bis 4 Kohlenstoffatomen oder der Arylrest ist, jedoch mindestens 80 % der Reste R_{f} Methylreste sind,
R² ein Polyetherrest der Formel II
-(Y)_{c}[O(C₂H_{4-d}R'_{d}O)ₘ(CₓH₂ₓO)ₚZ]_{w}
ist, mit der Bedeutung
c = 0 oder 1,
d = 1 bis 3,
m ≥ 1,
x = 2 bis 4,
p ≥ 1,
w = 1 bis 4,
Summe m + p = 3 bis 100,
R' = ein Wasserstoffrest, ein einwertiger aliphatischer, aromatischer oder substituierter aromatischer Kohlenwasserstoffrest mit 1 bis 18 C-Atomen, dessen Substituenten aus den Gruppen Wasserstoffrest, Alkylrest mit 1 bis 6 C-Atomen, Alkoxyrest und Hydroxyrest ausgewählt sind, wobei die Reste R' unterschiedlich sein können, jedoch pro Copolymermolekül mindestens ein Rest R' einen Aromaten oder substituierten Aromaten bezeichnet,
Z = ein Wasserstoffrest oder ein einwertiger organischer Rest,
Y = ein (w+1)-bindiger linearer oder verzweigter Kohlenwasserstoffrest mit 1 bis 18 C-Atomen
R³ ein Polyetherrest der Formel III
-(F)_{q}[O(CₓH₂ₓO)ᵣZ]_{g}
ist, mit der Bedeutung
g = 1 bis 4,
q = 0 oder 1,
x = 2 bis 4,
r ≥ 3,
F = ein (g+1)-bindiger linearer oder verzweigter Kohlenwasserstoffrest mit 1 bis 18 C-Atomen,
und wobei
b eine Zahl von 0 bis 8 ist,
a eine Zahl von 1 bis 100 ist, wenn b eine Zahl von 6 bis 8 ist;
a eine Zahl von 1 bis 200 ist, wenn b eine Zahl von 3 bis 6 ist;
a eine Zahl von 1 bis 300 ist, wenn b eine Zahl von 0 bis 3 ist.

2. Dieselkraftstoff gemäß Anspruch 1, enthaltend ein Entschäumergemisch, welches aus mindestens 65 Gew.-% der Siliconpolyether-Copolymeren gemäß Formel I sowie einem oder mehreren Siloxanen der Formel I, die keine Reste R² enthalten und/oder einem nicht hydrosilylierend umgesetzten Polyether besteht.

3. Dieselkraftstoff gemäß Anspruch 2, enthaltend einen nicht hydrosilylierend umgesetzten Polyether, der analog R² oder R3 aufgebaut ist und das Anlagerungsprodukt von Monomeren an einen ungesättigten Startalkohol ist.

4. Dieselkraftstoff gemäß Anspruch 1 oder 2, enthaltend ein oder mehrere Siloxane der allgemeinen Formel I, bei denen R_{f} entweder R¹ oder R³ ist, wobei mindestens ein Rest R_{f} der Rest R³ ist.

5. Dieselkraftstoff gemäß Anspruch 1 bis 4, bei dem der Gewichtsanteil des aromatenhaltigen Monomeren am Polyether nach Formel II am Siliconpolyether-Copolymeren mindestens 1 Gew.-% beträgt.

## Claims

1. Diesel fuel containing from 0.5 to 50 ppm, based on the fuel, of an antifoam comprising at least 65% by weight of silicone-polyether copolymers of the general formula I 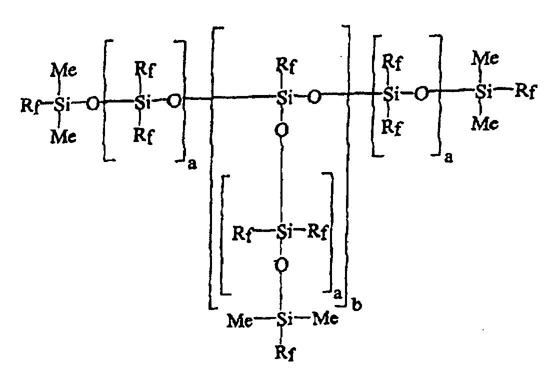 where the radical R_{f} is the radical R¹ or the radical R² or the radical R³, with the proviso that at least one radical R_{f} is the radical R², where
R¹ is an alkyl radical having from 1 to 4 carbon atoms or an aryl radical, but at least 80% of the radicals R_{f} are methyl radicals,
R² is a polyether radical of the formula II
-(Y)_{c}[O(C₂H_{4-d}R'_{d}O)ₘ(CₓH₂ₓO)ₚZ]_{w}
where
c = 0 or 1,
d = 1 to 3,
m ≥ 1,
x = 2 to 4,
p ≥ 1,
w = 1 to 4,
the sum m + p = 3 to 100,
R'= a hydrogen atom, a monovalent aliphatic, aromatic or substituted aromatic hydrocarbon radical having from 1 to 18 carbon atoms whose substituents are selected from the group consisting of the hydrogen atom, alkyl radicals having from 1 to 6 carbon atoms, alkoxy radicals and the hydroxy radical, where the radicals R' may be different but at least one radical R' per copolymer molecule is an aromatic or substituted aromatic,
Z = a hydrogen atom or a monovalent organic radical,
Y = a (w+1)-valent linear or branched hydrocarbon radical having from 1 to 18 carbon atoms,
R³ is a polyether radical of the formula III
- (F)_{q}[O(CₓH₂ₓO)ᵣZ]_{g}
where
g = 1 to 4,
q = 0 or 1,
x = 2 to 4,
r ≥ 3,
F = a (g+1)-valent linear or branched hydrocarbon radical having from 1 to 18 carbon atoms,
and
b is from 0 to 8,
a is from 1 to 100 when b is from 6 to 8;
a is from 1 to 200 when b is from 3 to 6;
a is from 1 to 300 when b is from 0 to 3.

2. Diesel fuel according to Claim 1 containing an antifoam mixture comprising at least 65% by weight of the silicone-polyether copolymers of the formula I together with one or more siloxanes of the formula I in which no radicals R² are present and/or a polyether which has not been hydrosilylated.

3. Diesel fuel according to Claim 2 containing a polyether which has not been hydrosilylated and has a structure analogous to R² or R³ and is the addition product of monomers onto an unsaturated starter alcohol.

4. Diesel fuel according to Claim 1 or 2 containing one or more siloxanes of the general formula I in which R_{f} is either R¹ or R³ but at least one radical R_{f} is the radical R³.

5. Diesel fuel according to any of Claims 1 to 4 in which the proportion by weight of the aromatic-containing monomer in the polyether of the formula II of the silicone-polyether copolymer is at least 1% by weight.

## Revendications

1. Carburant diesel comprenant de 0,5 à 50 ppm, par rapport au carburant, d'un anti-mousse comprenant au moins 65 % en poids de copolymères silicone-polyéther de formule générale I 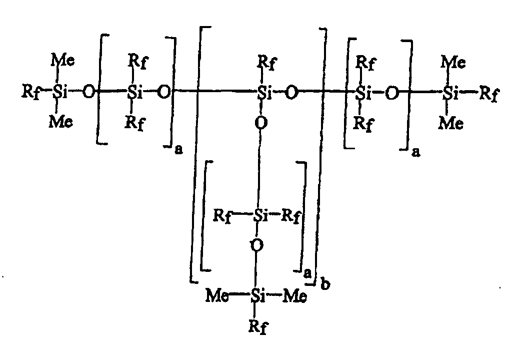 dans laquelle le radical R_{f} est le radical R¹ ou le radical R² ou le radical R³, à condition qu'au moins un radical R_{f} soit le radical R², où
R¹ représente un radical alkyle ayant de 1 à 4 atomes de carbone ou un radical aryle, mais au moins 80 % des radicaux R_{f} représentent des radicaux méthyle,
R² représente un radical polyéther de formule II
-(Y)_{c}[O(C₂H₄-_{d}R'_{d}O)ₘ(CₓH₂ₓO)ₚZ]^{w}
dans laquelle
c = 0 ou 1 ,
d = 1 à 3,
m ≥ 1,
x = 2 à 4,
p ≥ 1,
w = 1 à 4,
la somme m + p = 3 à 100,
R' = un radical hydrogène, un radical hydrocarboné monovalent, aliphatique, aromatique ou aromatique substitué ayant de 1 à 18 atomes de carbone, dont les substituants sont choisis parmi le groupe constitué d'un radical hydrogène, d'un radical alkyle ayant de 1 à 6 atomes de carbone, d'un radical alcoxy et d'un radical hydroxy, les radicaux R' pouvant être différents, mais au moins un radical R' par molécule de copolymère représentant un composé aromatique ou un composé aromatique substitué,
Z = un radical hydrogène ou un radical organique monovalent,
Y = un radical hydrocarboné linéaire ou ramifié, de valence (w+1), ayant de 1 à 18 atomes de carbone,
R³ représente un radical polyéther de formule III
-(F)_{q}[O(CₓH₂ₓO)ᵣZ]_{g}
dans laquelle
g = 1 à 4,
q = 0 ou 1,
x = 2 à 4,
r ≥ 3,
F = un radical hydrocarboné linéaire ou ramifié, de valence (g+1), ayant de 1 à 18 atomes de carbone,
et où
b représente un nombre de 0 à 8,
a représente un nombre de 1 à 100, si b représente un nombre de 6 à 8 ;
a représente un nombre de 1 à 200, si b représente un nombre de 3 à 6 ;
a représente un nombre de 1 à 300, si b représente un nombre de 0 à 3.

2. Carburant diesel selon la revendication 1, comprenant un mélange d'anti-mousses contenant au moins 65 % en poids des copolymères silicone-polyéther de formule I ainsi qu'un ou plusieurs siloxanes de formule I ne renfermant aucun radical R² et/ou un polyéther n'ayant pas subi de réaction d'hydrosilylation.

3. Carburant diesel selon la revendication 2, comprenant un polyéther n'ayant pas subi de réaction d'hydrosilylation, qu présente une structure analogue à R² ou R³ et est le produit d'addition de monomères sur un alcool amorceur insaturé.

4. Carburant diesel selon la revendication 1 ou 2, comprenant un ou plusieurs siloxanes de formule générale I, dans laquelle R_{f} est soit R¹ soit R³, au moins un radical R_{f} étant le radical R³.

5. Carburant diesel selon les revendications 1 à 4, dans lequel la proportion pondérale du monomère à fonction aromatique dans le polyéther de formule II du copolymère silicone-polyéther est d'au moins 1 % en poids.
